Europäisches Patentamt

European Patent Office

Office européen des brevets

(19)

(11) Publication number: **0 291 122 B1**

(12) **EUROPEAN PATENT SPECIFICATION**

(45) Date of publication of patent specification: **26.08.92**    (51) Int. Cl.⁵: **G09F 9/37**

(21) Application number: **88200880.8**

(22) Date of filing: **04.05.88**

(54) **Electroscopic display device.**

(30) Priority: **13.05.87 NL 8701138**

(43) Date of publication of application:
**17.11.88 Bulletin 88/46**

(45) Publication of the grant of the patent:
**26.08.92 Bulletin 92/35**

(84) Designated Contracting States:
**DE FR GB IT NL**

(56) References cited:
**EP-A- 0 230 081**
**EP-A- 0 272 760**
**DE-A- 3 047 495**
**US-A- 4 309 242**

**PATENT ABSTRACTS OF JAPAN, vol. 7, no. 57 (P-181)[1202], 9th March 1983, page 147 P 181; & JP-A-57 204 515 (SUWA SEIKOSHA K.K.) 15-12-1982**

(73) Proprietor: **N.V. Philips' Gloeilampenfabrieken**
**Groenewoudseweg 1**
**NL-5621 BA Eindhoven(NL)**

(72) Inventor: **Verhulst, Antonius Gerardus Hendrikus**
**c/o INT. OCTROOIBUREAU B.V. Prof. Holstlaan 6**
**NL-5656 AA Eindhoven(NL)**

(74) Representative: **Raap, Adriaan Yde et al**
**INTERNATIONAAL OCTROOIBUREAU B.V.**
**Prof. Holstlaan 6**
**NL-5656 AA Eindhoven(NL)**

Rank Xerox (UK) Business Services

# Description

The invention relates to a display device comprising a first and a second radiation-transparent supporting plate, a plurality of display elements each having at least one fixed electrode and one electrode which is movable with respect to said electrode by means of electrostatic forces and which has two end positions determined by abutment faces, said electrode being separated from the fixed electrode by means of an electrically insulating layer and being provided with a pattern of radiation-transparent apertures, the device being provided at the area of the fixed electrode with a pattern of areas which are not transparent to radiation, which pattern is substantially identical to the pattern of radiation-transparent areas in the movable electrode, the display element passing substantially no radiation when the two patterns are substantially co-planar.

A device of this type is described in United States Patent No. 4,309,242. Figure 10 of the said Patent describes how such a device is driven in the transmission mode. As is apparent from this Figure, use is made of directed light radiation. On the one hand this results in a limitation with respect to the viewing angle at which the picture generated in the device can be observed, whilst on the other hand the use of such a light source takes extra space in comparison with, for example, a diffuse light source.

It is an object of the invention to provide a picture display device of the type described in the opening paragraph in which the viewing angle has substantially no influence on the picture display, whilst also a more compact light source can be used.

To this end a device according to the invention is characterized in that the device is driven in the transmission mode and the supporting plate on the viewing side is provided with luminescent material on its side facing the electrodes and in that a radiation source is used which is suitable for emitting radiation of a sufficiently short wavelength to excite the luminescent material, whilst at least one of the two electrodes on its side facing the luminescent material is reflective to the radiation emitted by this material. Both the fixed and the movable electrode are preferably made reflective.

Since the picture on the viewing side is generated in luminescent material (for example, blue, green and red phosphors), the intensity of the emitted light in all directions is substantially equal. The luminescent material is, for example, excited by UV light which realises the conversion to visible light.

However, during this conversion a large portion of the amount of light generated in the phosphors is lost. In fact, the conversion is effected within a very thin layer (approximately 2 to 3 microns) on the side of the incident ultraviolet radiation. Since the generated visible light is emitted in all directions and is also scattered by the phosphors, a large part thereof (approximately 60 to 70%) leaves the phosphor layer on the side of the UV source. This of course leads to a lower brightness, but moreover a part of the light generated in the phosphors may be partly backscattered via reflection from various surfaces and then at an unacceptably large spatial angle or at undesired locations. All this leads to a loss of resolution and a reduced contrast.

In the non-prepublished Patent Application No. EP-A-0 272 760 in the name of the Applicant the use of an interference filter is proposed which substantially completely reflects light emitted in the direction of the radiation source. Such a solution is not strictly necessary in electroscopic display devices according to the invention, because a part of the light emitted by the phosphors in the direction of the radiation source is reflected by the movable electrode.

An additional advantage, which is due to the small distance between the two supporting plates, is that a diffuse radiation source can be used, as will hereinafter be described in greater detail.

The invention will now be described in greater detail by way of example with reference to the accompanying drawing in which

Figure 1 shows diagrammatically a device as proposed in the non-prepublished Patent Application EP-A-0 272 760 in the name of the Applicant and using an electroscopic device as shown in Figure 10 of US-A-4 309 242.

Figure 2 shows diagrammatically a device according to the invention.

The Figures are diagrammatical and not to scale. Corresponding elements are generally denoted by the same reference numerals.

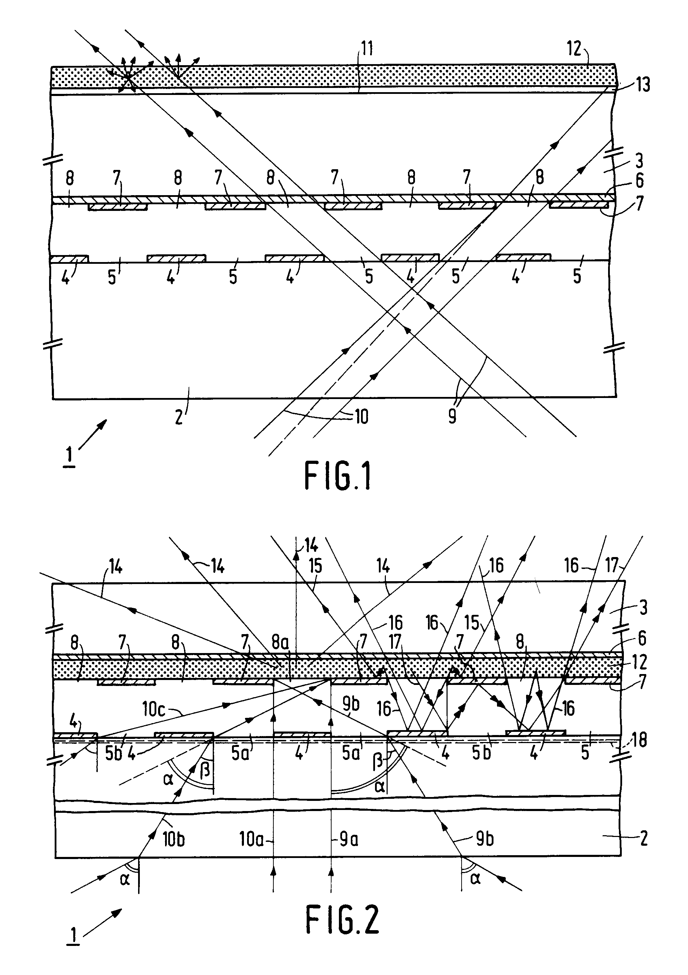

The device of Figure 1 shows diagrammatically a part of an electroscopic display device according to US-A-4,309,242 in which only one pixel is shown in its light-transmissive state.

The display device 1 has a first supporting plate 2, in this example of quartz or another UV-transmitting material and a second supporting plate 3 of, for example, glass. A fixed electrode 4 having a pattern of apertures 5 which are transparent to radiation is present on the first supporting plate 2. A transparent counter electrode 6 of, for example, indium tin oxide is present on the second supporting plate 3. An electrode 7 is freely movable between the two supporting plates 2, 3. This electrode 7 has apertures 8 which are transparent to radiation and is movable between the two supporting plates by means of electrostatic forces, whilst, for example, resilient means not shown are present in order to provide the movable electrode with electrical voltages and to bring it to a balanced position.

The end positions of the movable electrode are separated from the electrodes 4, 6 by electrically insulating layers which are not shown. For a more detailed description of the operation and the arrangement of such a display device reference is made to said United States Patent No. 4,309,242.

In the radiation-transmissive state as is shown in Figure 1 the radiation beams 9, 10 must pass both the apertures 5 and 8 in the fixed electrode 4 and the movable electrode 7, respectively, when using visible light. For the sake of clarity refraction and reflection have not been taken into account in the drawing of the radiation path. Without special measures these beams leave the front surface 11 of the display device at an angle which is approximately 40-50° dependent on the geometry of the electrodes 4, 7 and the distance between the supporting plates 2, 3. Consequently the viewing angle of such a display device is very limited.

As described in the non-prepublished Patent Application EP-A-0 272 760 in the name of the Applicant the latter drawback can be considerably mitigated by using UV radiation for the radiation beams 9, 10 and by coating the surface 11 with a phosphor layer 12 irradiating light generated in the layer 12 to all sides. Since colour filters are no longer required in colour picture display devices, the brightness also increases. Possible losses due to backscattering of light generated in the phosphor layer 12 may be largely compensated for by using an interference filter 13. Directed radiation beams 9, 10 however, remain necessary due to the relatively large distance between the phosphor layer 12 and the actual switching elements (located between the electrodes 6 and 4).

In a device according to the invention, as shown in Figure 2, the luminescent layer, in this example a phosphor layer 12, is present on the other side of the supporting plate 3. The counter electrode 6 is present between this supporting plate 3 and the phosphor layer 12. In the drawing of the radiation path of the UV radiation beams 9, 10 refraction of the radiation has been taken into account. The Figure shows that within the aperture 8a not only the beams 9a, 10a which are substantially perpendicularly incident may hit the phosphor layer 12, but also the beams 9b, 10b which are incident at an angle $\alpha$ with respect to the normal and the beams with angles of incidence therebetween.

The geometry of the electrodes and the distance of the supporting plates determine the angle $\alpha$ and hence the angle $\beta$ with which the UV beam 9, 10 is incident on the interface between the quartz and the electro-optical medium which is air in this example. They may be chosen to be such that $\beta$ is at least equal to the so-called critical angle. In that case the beams which are incident on the phosphor layer 12 within the aperture 8a will substantially only originate from the apertures 5a in the fixed electrode 4. For a slightly different choice contributions are also possible from radiation through the apertures 5b (beams 10c) but they will be considerably smaller because then the condition for total reflection from the quartz glass-air surface is satisfied sooner.

It will be evident from the foregoing that UV radiation may be incident at angles varying to at least $\alpha$° with respect to the normal, which provides the possibility of using a diffuse UV source. The latter is advantageous because they can be manufactured more easily in practice and may have a flat shape so that the total thickness of the device is reduced.

The ultraviolet radiation emitted by the UV source realises conversion to visible light 14 in the phosphor layer 12 (for example, to the primary colours red, green, blue) which is passed by the second supporting plate 3 of, for example, glass at a large angle range and which constitutes a (colour) picture. A part of this light is, however, lost because the generated light is emitted to all directions and is scattered by the phosphors.

Since according to the invention the movable electrode is reflective on its side facing the phosphor layer 12, a part of the backscattered light (illustrated in this example by means of light beams 15) is reflected by this electrode so that it still contributes to the light output.

Light beams which are scattered in the apertures 8 of the movable electrode in the direction of the fixed electrode are reflected by these electrodes because in this embodiment the fixed electrodes are also reflective. In this manner a part of the backscattered light (illustrated in this example by means of light beams 16) is reflected to the front surface 11 of the display device. In the latter case the reflective beam does not necessarily have to return via the same aperture 8, but it may alternatively return through apertures 8 located in the proximity, provided that the movable electrodes 7 are reflective on both sides. In the relevant example this is illustrated by means of light beam 17.

Various choices are possible for the phosphors. When using a radiation source based on the 254 nm Hg resonance line, the following combination is very satisfactory:

- $Ba\ Mg_2\ Al_{16}\ O_{27}$: Eu as a blue phosphor (maximum emission at 450 nm);
- $Ce\ Mg\ Al_{11}\ O_{19}$: Tb as a green phosphor (maximum emission at 545 nm);
- $Y_2\ O_3$: Eu as a red phosphor (maximum emission at 612 nm).

The associated emission wavelengths are satisfactorily suitable for the maximum sensitivity of each of the three colour receptors of the eye; this provides the possibility of an eminent colour rendition. When using a radiation source mainly with long-wave UV radiation, for example, a high-pressure mercury lamp, very suitable materials are, for example, Zn S: Ag (blue), (Zn, Cd) S: Cu, Al (green) and $Y_2 O_2 S : Eu$ (red).

The movable electrodes may be secured to one of the supporting plates, for example, by means of resilient elements which are provided on the circumference of the movable electrodes. In this case the resilient force ensures that in the rest state the movable electrodes are in such a position that the device is transparent to light. It is alternatively possible to effect switching completely electrostatically. In that case the device has an extra transparent electrode shown diagrammatically. All this is described in greater detail in EP-A-0 230 081, published 29.7.87.

In the foregoing description it has been assumed that the electrodes 4 are fixed and the electrodes 7 are movable. It will be evident that similar advantages as mentioned above can be obtained if the electrodes 4 are movable and the electrodes 7 are fixed; in that case the first supporting plate 2 has a fixed transparent electrode 18 whilst the electrode 6 may or may not be dispensed with, dependent on the drive mode.

## Claims

1.  A display device comprising a first and a second radiation-transparent supporting plate, a plurality of display elements each having at least one fixed electrode and one electrode which is movable with respect to said electrode by means of electrostatic forces and which has two end positions determined by abutment faces, said electrode being separated from the fixed electrode by means of an electrically insulating layer and being provided with a pattern of radiation-transparent apertures, the device being provided at the area of the fixed electrode with a pattern of areas which are not transparent to radiation, which pattern is substantially identical to the pattern of radiation-transparent areas in the movable electrode, the display element passing substantially no radiation when the two patterns are substantially co-planar, characterized in that the device is driven in the transmission mode and the supporting plate on the viewing side is provided with luminescent material on its side facing the electrodes an in that a radiation source is sued which is suitable for emitting radiation of a sufficiently short wavelength to excite the luminescent material, whilst at least one of the two electrodes on its side facing the luminescent material is reflective to the radiation emitted by said material.

2.  A display device as claimed in Claim 1, characterized in that the two electrodes on the side facing the luminescent material are reflective to the radiation emitted by the luminescent material.

3.  A display device as claimed in Claim 1, characterized in that the other electrode on the side remote from the luminescent material is reflective ot the radiation emitted by the luminescent material.

4.  A display device as claimed in Claim 1, 2 or 3, characterized in that the device includes a diffuse radiation source.

5.  A display device as claimed in any one of the preceding Claims, characterized in that the radiation source emits radiation at a central wavelength of 254 nm and in that one or more of the following materials is chosen for the luminescent material:
    - $Ba Mg_2 Al_{16} O_{27} : Eu$ as a bleu phosphor;
    - $Ce Mg Al_{11} O_{19} : Tb$ as a green phosphor;
    - $Y_2 O_3 : Eu$ as a red phosphor.

6.  A display device as claimed in any one of the preceding Claims 1 to 4, characterized in that the radiation source emits radiation at a wavelength in the range of 360-380 nm.

## Patentansprüche

1.  Wiedergabe-Einrichtung mit einer ersten und einer zweiten strahlungsdurchlässigen Stützplatte, einer Anzahl von Wiedergabe-Elementen, die jeweils mindestens eine feststehende Elektrode und eine bezüglich dieser Elektrode mittels elektrostatischer Kräfte bewegliche Elektrode haben, die zwei durch Anschlagflächen bestimmte Endlagen hat, wobei die genannte Elektrode von der feststehenden Elektrode mittels einer elektrisch isolierenden Schicht geschieden und mit einer Struktur von strahlungsdurchlässigen Öffnungen versehen ist, wobei die Einrichtung im Bereich der feststehenden Elektrode mit einer Struktur von nicht strahlungsdurchlässigen Flächen versehen ist, welche Struktur im wesentlichen mit der Struktur der strahlungsdurchlässigen Bereiche in der beweglichen Elektrode identisch ist, wobei das Wiedergabe-Element nahezu keine Strahlung durchläßt, wenn die beiden Strukturen nahezu in einer einzigen Ebene liegen, dadurch gekennzeichnet, daß die Einrichtung in Transmission betrieben wird und die Stützplatte an der Betrachtungsseite auf ihrer den Elektroden zugewandten Seite mit lumineszierendem Material versehen ist, und daß eine zur Aussendung von Strahlung mit zur Anregung des lumineszierenden Materials genügend kleiner Wellenlänge geeignete Strahlungsquelle verwendet wird, während mindestens eine der beiden Elektroden an ihrer dem lumineszierenden Material zugewandten Seite für die von dem genannten Material ausgesendete Strahlung reflektierend ist.

2. Wiedergabe-Einrichtung nach Anspruch 1, dadurch gekennzeichnet, daß die beiden Elektroden auf der dem lumineszierenden Material zugewandten Seite für die von dem lumineszierenden Material ausgesendete Strahlung reflektierend sind.

3. Wiedergabe-Einrichtung nach Anspruch 1, dadurch gekennzeichnet, daß die andere Elektrode auf der dem lumineszierenden Material abgewandten Seite für die von dem lumineszierenden Material ausgesendete Strahlung reflektierend ist.

4. Wiedergabe-Einrichtung nach Anspruch 1, 2 oder 3, dadurch gekennzeichnet, daß die Einrichtung eine Quelle difuser Strahlung enthält.

5. Wiedergabe-Einrichtung nach einem der vorhergehenden Ansprüche, dadurch gekennzeichnet, daß die Strahlungsquelle Strahlung bei einer zentralen Wellenlänge von 254 nm aussendet und daß eines oder mehr der folgenden Materialien für das lumineszierende Material gewählt sind:
 - $Ba\ Mg_2\ Al_{16}\ O_{27}$ : Eu als blauer Leuchtstoff;
 - $Ce\ Mg\ Al_{11}\ O_{19}$ : Tb als grüner Leuchtstoff;
 - $Y_2\ O_3$ : Eu als roter Leuchtstoff.

6. Wiedergabe-Einrichtung nach einem der vorhergehenden Ansprüche 1 bis 4, dadurch gekennzeichnet, daß die Strahlungsquelle Strahlung bei einer Wellenlänge im Bereich von 360 nm bis 380 nm aussendet.

**Revendications**

1. Dispositif d'affichage comportant une première plaque de support transparente au rayonnement et une deuxième plaque de support transparente au rayonnement, plusieurs éléments d'affichage présentant chacun au moins une électrode fixe et une électrode qui est mobile par rapport à ladite électrode à l'aide de forces électrostatiques et qui présente deux positions terminales déterminées par des faces d'attouchement, ladite électrode étant séparée de l'électrode fixe à l'aide d'une couche électro-isolante et étant munie d'une configuration d'ouvertures transparentes au rayonnement, le dispositif étant muni d'une configuration de régions non transparentes au rayonnement à l'endroit de l'électrode fixe, laquelle configuration est pratiquement identique à la configuration des régions transparentes au rayonnement dans l'électrode mobile, l'élément d'affichage ne transmettant pratiquement pas de rayonnement lorsque les deux configurations sont pratiquement coplanaires, caractérisé en ce que le dispositif est commandé en mode de transmission et la plaque de support disposée du côté de vision est munie de matériau luminescent sur la face située vis-à-vis des électrodes et par l'utilisation d'une source de rayonnement qui est appropriée à l'émission de rayonnement d'une longueur d'onde suffisamment courte pour exciter le matériau luminescent, alors qu'au moins l'une des deux électrodes du côté situé vis-à-vis du matériau luminescent est réflectrice pour le rayonnement émis par ce matériau.

2. Dispositif d'affichage selon la revendication 1, caractérisé en ce que les deux électrodes du côté situé vis-à-vis du matériau luminescent sont réflectrices au rayonnement émis par le matériau luminescent.

3. Dispositif d'affichage selon la revendication 1, caractérisé en ce que l'autre électrode du côté opposé au matériau luminescent est réflectrice au rayonnement émis par le matériau luminescent.

4. Dispositif d'affichage selon la revendication 1, 2 ou 3, caractérisé en ce que le dispositif comporte une source de rayonnement diffus.

5. Dispositif d'affichage selon l'une des revendications précédentes, caractérisé en ce que la source de rayonnement émet du rayonnement à une longueur d'onde centrale de 254 nm et en ce qu'un ou plusieurs des matériaux suivants est/sont choisi(s) pour le matériau luminescent.
 - $Ba\ Mg_2\ Al_{16}\ O_{27}$ : Eu comme substance

phosphorescente bleue;

- Ce Mg Al$_{11}$ O$_{19}$ : Tb comme substance phosphorescente verte;
- Y$_2$ O$_3$ : Eu comme substance phosphorescente rouge.

6. Dispositif d'affichage selon l'une des revendications précédentes 1 à 4, caractérisé en ce que la source de rayonnement émet du rayonnement à une longueur d'onde située dans la gamme de 360 à 380 nm.

FIG.1

FIG.2